# EUROPÄISCHE PATENTSCHRIFT

(11) **EP 1 977 583 B1**
(45) Veröffentlichungstag und Bekanntmachung des Hinweises auf die Patenterteilung: **23.05.2012**
(21) Anmeldenummer: 07704098.8
(22) Anmeldetag: 23.01.2007
(51) Int. Cl.: H04L 29/12, H04L 29/06

(54) **Verfahren zur Übermittlung einer Nachricht und Netzwerk**
Method for transmitting a message and network
Procédé pour la transmission d'un message et réseau

(30) Priorität: 27.01.2006 DE 102006004025
(43) Veröffentlichungstag der Anmeldung: 08.10.2008
(73) Patentinhaber: SIEMENS AKTIENGESELLSCHAFT, 80333 München (DE)
(72) Erfinder: DIPPL, Sebastian, 81369 München (DE); RUSITSCHKA, Steffen, 81543 München (DE); SOUTHALL, Alan, 81247 München (DE)
(86) Internationale Anmeldenummer: PCT/EP2007/050666
(87) Internationale Veröffentlichungsnummer: WO 2007/085601

(56) Entgegenhaltungen:
- US-A1- 2002 103 998
- FORD B ET AL: "Peer-to-peer communication across network address translators" PROCEEDINGS OF THE USENIX ANNUAL TECHNICAL CONFERENCE, XX, XX, 2005, Seiten 179-192, XP002408088
- FORD M I T P SRISURESH CAYMAS SYSTEMS D KEGEL KEGEL COM B: "Peer-to-Peer(P2P) communication across Network Address Translators(NAT)" IETF STANDARD-WORKING-DRAFT, INTERNET ENGINEERING TASK FORCE, IETF, CH, Nr. 2, März 2004 (2004-03), XP015013270 ISSN: 0000-0004

## Beschreibung

Die Erfindung betrifft ein Verfahren zur Übermittlung einer Nachricht sowie ein Netzwerk umfassend Knoten mit Mitteln zur Durchführung des Verfahrens.

Der Austausch von Informationen in heutigen Netzwerken, wie beispielsweise dem Internet, funktioniert zumeist nach dem Client-Server-Prinzip. Das bedeutet, dass ein Computer oder eine Gruppe von Computern, die einen Server darstellen, Informationen zur Verfügung stellen. Andere Netzwerkknoten oder Computer, die diese Informationen benötigen, rufen sie von dem Server ab.

Dieses Verfahren hat den Nachteil, dass die Last, die Informationen zu verteilen, ausschließlich bei dem Server liegt. Der Server muss alle Anfragen nach einer konkreten Information selbst beantworten und die Information an die entsprechenden Clients, die die Anfrage gestellt haben, verschicken. Dies ist besonders nachteilig, wenn eine bestimmte Information neu ist und daher in kurzer Zeit von sehr vielen Clients abgerufen wird. Ein Beispiel für eine solche Information ist ein Update für ein Software, beispielsweise ein Update für ein Betriebssystem. Bei solchen Informationen ist es notwendig, einen besonders belastungsfähigen Server zur Verfügung zu stellen, der in der Lage ist, die Last der Anfragen zu tragen. Ein solcher Server ist kostenintensiv. Geht in kurzer Zeit die Anzahl der Anfragen nach der Information zurück, ist der Server jedoch nicht mehr ausgelastet. Die Investition in das leistungsfähige Serversystem ist somit nach kurzer Zeit überflüssig.

Eine Alternative, die die genannten Nachteile vermeidet, sind Peer-Netzwerke. Dies sind Netzwerke aus gleichberechtigten Knoten, d.h. Computern. Ein Beispiel für ein solches Peer-Netzwerk sind die heute üblichen Peer-to-Peer-Netzwerke. Peer-Netzwerke sind im Allgemeinen logische Netzwerke, zu denen sich üblicherweise ein Teil von Knoten eines größeren Netzwerks, wie z.B. des Internets, zusammenschließen.

Wichtigste Eigenschaft der Peer-Netzwerke ist, dass jeder Knoten zugleich als Server und als Client auftreten kann. Das bedeutet, dass jeder Knoten Informationen abrufen kann und auch Informationen zur Verfügung stellen kann. Soll nun eine neue Information, wie beispielsweise ein Software-Update zur Verfügung gestellt werden, bietet in einem Peer-Netzwerk automatisch jeder Knoten den Teil des Software-Updates, der bereits auf diesem Knoten gespeichert ist, zum Download für andere Knoten des Peer-Netzwerkes an. Im Allgemeinen ist weiterhin ein Server notwendig, der die Information, wie beispielsweise das Software-Update, dem Peer-Netzwerk zumindest für den Anfang zur Verfügung stellt. Die Hauptlast der Informationsverteilung liegt nun aber nicht mehr bei diesem Server, sondern bei den Knoten des Peer-Netzwerkes. Diese Peer-Knoten sind im Allgemeinen Computer von Teilnehmern des Netzwerkes. Diese Computer werden insoweit mit der Informationsverteilung belastet, wie es ihrer Ausstattung gemäß möglich ist. Dies bedeutet, dass die zusätzliche Belastung für Benutzer dieser Computer im Allgemeinen unbemerkt bleibt und dass die Lastverteilung somit lediglich auf einer besseren Ausnutzung bereits vorhandener Ressourcen besteht.

Bei Peer-Netzwerken agieren alle Knoten des Netzwerks gleichberechtigt, also als Peers. Jeder Knoten des Netzwerks kann von jedem anderen Knoten des Netzwerks Informationen beziehen oder an diese Informationen weitergeben. Dazu ist es notwendig, dass prinzipiell alle Knoten des Peer-Netzwerkes aufeinander zugreifen können. Ein Problem kann sich hierbei ergeben, wenn einzelne oder sogar viele Knoten des Peer-Netzwerkes einem Zugriffsschutz unterliegen. Ein solcher Zugriffsschutz kann sich für einen Knoten des Peer-Netzwerks ergeben, wenn sie sich hinter einem Restricted- oder Port-Restricted-NAT (Network Adress Translation)-Gerät befindet. Solche NAT-Geräte haben die Eigenschaft, extern ankommende Pakete nur von einer IP-Port-Kombination oder IP-Adresse zu akzeptieren, an die von dem empfangenden Knoten vorher ein Paket versendet wurde. Auch wenn der empfangende Knoten bereits vorher ein Paket an den sendenden Knoten übermittelt hat, ist ein Empfang eines Pakets vom sendenden Knoten unter Umständen für nur eine kurze Zeitspanne, bspw. 30 Sekunden möglich. Da somit ein beliebiger Zugriff eines Knotens des Peer-Netzwerkes auf einen weiteren Knoten des Peer-Netzwerkes nicht möglich ist, kann aus solchermaßen geschützten Knoten kein Peer-Netzwerk aufgebaut werden, ohne weitere Maßnahmen zu ergreifen.

Eine bekannte Lösung für das genannte Problem ist eine Technik, die als UDP Hole Punching bezeichnet wird. Dabei wird ein allen Knoten bekannter Hole-Punching-Server zu Hilfe genommen. Dieser vermittelt die Kommunikation zwischen zwei geschützten Knoten des Peer-Netzwerks. Will ein geschützter Knoten des Peer-Netzwerkes mit einem weiteren geschützten Knoten eine Verbindung aufbauen, so wird dies dem Hole-Punching-Server mitgeteilt. Daraufhin veranlasst der Hole-Punching-Server, dass beide Knoten sich gegenseitig Aufhebungs-Nachrichten schicken, um den jeweiligen Zugriffsschutz durch die NAT-Geräte aufzuheben. Diese Aufhebungs-Nachrichten können durch den Zugriffsschutz im Allgemeinen vom anderen Knoten nicht empfangen werden, was aber auch nicht notwendig ist. In der Folge jedoch können beide Knoten ungehindert miteinander kommunizieren.

Die Druckschrift FORD B et al.: "Peer-to-peer communication across network address translators" PROCEEDINGS OF THE USENIX ANNUAL TECHNICAL CONFERENCE, 2005, Seiten 179-192, offenbart eine Peer-to-Peer Kommunikation über NAT-Geräte basierend auf dem soeben beschriebenen Hole-Punching.

Das genannte Verfahren hat jedoch den Nachteil, dass ein Hole-Punching-Server benötigt wird. Weiterhin muss dieser Hole-Punching-Server allen Knoten des Peer-Netzwerkes bekannt sein oder bekannt gemacht werden. Ferner kann in einem großen Peer-Netzwerk die Belastung des Hole-Punching-Servers mit Kommunikationsanfragen sehr groß werden, was eine entsprechend umfangreiche und möglicherweise kostenintensive Auslegung erforderlich macht.

Die der Erfindung zugrunde liegende Aufgabe besteht darin, eine verbesserte Möglichkeit für die Kommunikation in einem Netzwerk mit wenigstens teilweise zugriffsgeschützten Netzwerkknoten anzugeben.

Diese Aufgabe wird durch ein Verfahren gemäß Anspruch 1 und durch ein Netzwerk gemäß Anspruch 11 gelöst.

Durch das erfindungsgemäße Vorgehen wird eine Reihe von Vorteilen erreicht. So ist eine direkte Kommunikation der Knoten des Netzwerkes möglich, auch wenn einige dieser Knoten zugriffsgeschützt sind. Die Kommunikation im Netzwerk funktioniert sogar dann, wenn alle Knoten einem Zugriffsschutz unterliegen. Weiterhin ist es von Vorteil, dass die Kommunikation zwischen den Knoten transparent ist gegenüber dem Zugriffsschutz. Das bedeutet, dass ein Knoten immer gleich behandelt werden kann, unabhängig davon, ob er zugriffsgeschützt ist oder nicht. Das bedeutet wiederum, dass in vorteilhafter Weise kein Knoten von einem anderen Knoten wissen muss, ob er zugriffsgeschützt ist oder nicht.

Um eine Kommunikation zwischen den Knoten trotz des Zugriffsschutzes zu erreichen, wird unabhängig vom verwendeten Verfahren eine zusätzliche Belastung des Netzwerks in Form von zusätzlichen Nachrichten zwischen den Knoten erforderlich. Diese zusätzliche Last wird jedoch beim erfindungsgemäßen Verfahren in vorteilhafter Weise auf die Knoten des Netzwerks verteilt. Besonders von Vorteil ist hierbei, dass kein spezieller Hole-Punching-Server notwendig ist, um eine Kommunikation zwischen den Knoten des Netzwerks zu ermöglichen. Gegenüber der Verwendung eines Hole-Punching-Servers wird zusätzlich der Vorteil erreicht, dass die Belastung mit Nachrichten verringert wird.

In einer vorteilhaften Ausgestaltung und Weiterbildung der Erfindung wird vom Zwischenknoten der Folge die Adresse des ihm zugeordneten Knotens an den ersten Knoten übermittelt. Dieses Vorgehen weist den Vorteil auf, dass der erste Knoten eine Nachricht direkt an den zugeordneten Knoten übermitteln kann.

In einer weiteren vorteilhaften Ausgestaltung und Weiterbildung der Erfindung wird die Adresse des zweiten Knotens vom letzten Zwischenknoten der Folge an den ersten Knoten übermittelt. Diese Vorgehensweise zeichnet sich durch eine höhere Effizienz aus, da nur der letzte Zwischenknoten die Adresse des zweiten Knotens kennt.

In einer weiteren vorteilhaften Ausgestaltung und Weiterbildung der Erfindung übermittelt bei der Ermittlung der Folge jeder Zwischenknoten die Adresse des nächsten Zwischenknotens an den ersten Knoten. Dies hat den Vorteil, dass der erste Knoten alle Adressen der Zwischenknoten erfährt und somit die Übermittlung der Nachricht mit größerer Unabhängigkeit von einzelnen Zwischenknoten betreiben kann.

In einer weiteren vorteilhaften Ausgestaltung und Weiterbildung der Erfindung übermittelt bei der Ermittlung der Folge der erste Knoten an jeden Zwischenknoten eine Suchanfrage-Nachricht. Durch dieses Vorgehen wird der Vorteil erreicht, dass ein großer Teil der Last bei dem Verfahren zur Übermittlung der Nachricht auf dem ersten Knoten lastet. Dadurch wird vorteilhaft die Angriffsmöglichkeit auf das Netzwerk, bspw. durch ein Überfluten mit Nachrichtenübermittlungen, reduziert.

In einer weiteren vorteilhaften Ausgestaltung und Weiterbildung der Erfindung sendet wenigstens der letzte Knoten der Folge eine Aufhebungsanfrage-Nachricht an den zweiten Knoten.

Die Aufhebungsanfrage-Nachricht kann bspw. dazu führen, dass der zweite Knoten eine Nachricht an den ersten Knoten sendet. Hierdurch wird erreicht, dass der erste Knoten eine Nachricht direkt an den zweiten Knoten senden kann, die dieser auch empfangen kann. Weiterhin kann vorteilhaft der zweite Knoten auch eine direkte Antwort an den ersten Knoten senden, die dieser wiederum ebenfalls empfangen kann. Hierdurch wird auch eine höhere Effizienz bei der Übermittlung der Nachricht erreicht, da ein Transport der Adresse des ersten Knotens über die Zwischenknoten hinweg nicht notwendig ist.

In einer weiteren vorteilhaften Ausgestaltung und Weiterbildung der Erfindung wird durch jeden Zwischenknoten eine Aufhebungsanfrage-Nachricht gesendet. Weiterhin erfolgt das Übermitteln einer Suchanfrage-Nachricht an jeden Zwischenknoten. Diese Vorgehensweise weist den Vorteil auf, dass der Inhalt der Nachrichten reduziert wird, da weniger Adressübermittlungen nötig sind. Weiterhin entsteht hierdurch der Vorteil, dass der erste Knoten eine ständige Kontrolle über den Prozess der Übermittlung der Nachricht hat.

In einer weiteren vorteilhaften Ausgestaltung und Weiterbildung der Erfindung werden für eine Übermittlung eines Inhalts an einen Zielknoten die folgenden Schritte durchgeführt:
- Ermittlung wenigstens eines Quellknotens, auf dem der Inhalt gespeichert ist;
- Übermittlung einer Anforderungsnachricht für den Inhalt vom Zielknoten an den Quellknoten;
- Übermittlung des Inhalts vom Quellknoten an den Zielknoten.

Ein solcher Inhalt kann beispielsweise eine Datei sein. Es ist aber auch möglich, dass ein solcher Inhalt ein Verweis auf eine Datei ist, wobei die Datei selbst beispielsweise wiederum auf einem anderen Knoten gespeichert sein kann als der Verweis. Die Anforderungsnachricht ist eine Nachricht, die eine Aufforderung enthält, den gesuchten Inhalt an den Zielknoten zu übermitteln.

Hierdurch ergibt sich der Vorteil, dass in einem Netzwerk, in dem die Knoten zumindest teilweise zugriffsgeschützt sind, ein Zielknoten dennoch eine Suche nach einem Inhalt, beispielsweise einer Datei, durchführen kann. Weiterhin kann der Zielknoten dem Quellknoten, der den Inhalt enthält, eine Anforderungs-Nachricht übermitteln und der Quellknoten kann dem Knoten wiederum den Inhalt übermitteln. Der wechselseitige Zugriffsschutz, der für die beiden Knoten möglicherweise besteht, wird in vorteilhafter Weise aufgehoben.

In einer weiteren vorteilhaften Ausgestaltung und Weiterbildung der Erfindung stellt wenigstens ein Teil der Knoten eine Information über sich anderen Knoten zur Verfügung, wobei die Information die Art seines Zugriffsschutzes enthält. Die Art des Zugriffsschutzes umschließt auch die Möglichkeit, dass gar kein Zugriffsschutz besteht.

Hieraus ergibt sich der Vorteil, dass die Anzahl der Nachrichten, die zur Aufhebung des Zugriffsschutzes benötigt werden, reduziert werden kann. Dies liegt daran, dass für einen Knoten, der keinen Zugriffsschutz aufweist, die Übermittlung bestimmter Nachrichten, die der Aufhebung des Zugriffsschutzes dienen, vermieden werden, kann. Hieraus ergibt sich in vorteilhafter Weise eine Entlastung des Netzwerkes.

In einer weiteren vorteilhaften Ausgestaltung und Weiterbildung der Erfindung speichert wenigstens ein Teil der Knoten, an welche Knoten innerhalb einer festlegbaren Merkzeitspanne Nachrichten gesendet wurden und/oder von welchen Knoten innerhalb der festlegbaren Merkzeitspanne Nachrichten empfangen wurden.

Hierdurch können vorteilhaft Nachrichten eingespart werden, die lediglich der Aufhebung des Zugriffsschutzes dienen, denn diese sind nicht nötig, wenn innerhalb der Merkzeitspanne der Zugriffsschutz bereits aufgehoben wurde.

Die Erfindung betrifft ferner ein Netzwerk umfassend Knoten mit Mitteln zur Durchführung des erfindungsgemäßen Verfahrens.

Bevorzugt funktioniert das Netzwerk als Peer-to-Peer-Netzwerk. In einer besonders bevorzugten Alternative funktioniert das Netzwerk als ein Chord-Netzwerk.

Weitere Einzelheiten und Vorteile der Erfindung werden anhand von in der Zeichnung dargestellten Ausführungsbeispielen näher erläutert. Dabei zeigen:
- Figur 1: ein schematisches Netzwerk bestehend aus sechs Knoten;
- Figur 2: ein schematisches Chord-Netzwerk mit sechzehn Schlüsseln.

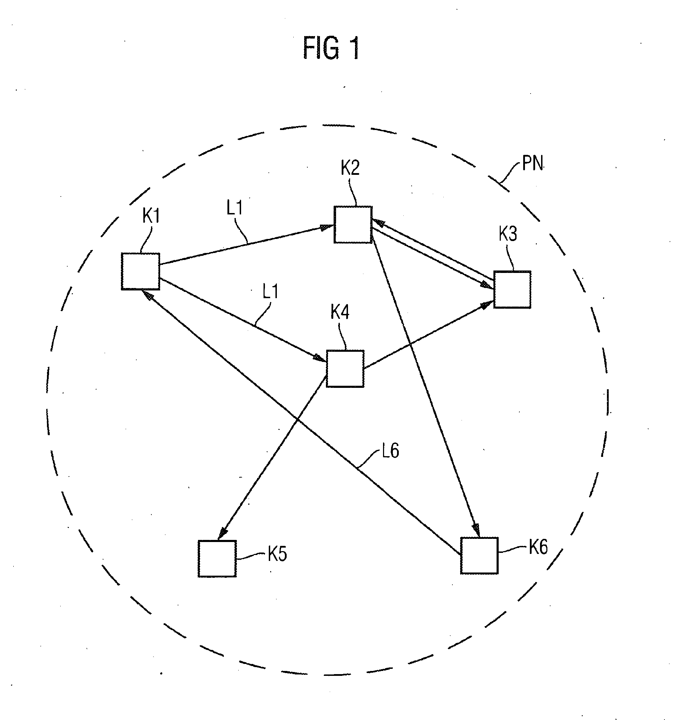

Das Netzwerk PN gemäß Figur 1 besteht aus sechs Netzwerknoten K1...6. Jedem Knoten K1...6 sind in diesem Beispiel weitere Knoten K1...6 zugeordnet. Die zugeordneten Knoten K1...6 für jeden Knoten K1...6 bilden dabei jeweils eine sog. Liste. Die Listen werden in Figur 1 durch die Pfeile L1...6 symbolisiert. Dabei zeigt jeder Pfeil L1...6 von einem Knoten K1...6 zu einem in dessen Liste verzeichneten, d.h. ihm zugeordneten Knoten K1...6. So weist der erste Knoten K1 eine unsymmetrische Liste mit zwei Einträgen auf, nämlich dem zweiten Knoten K2 und dem vierten Knoten K4. Dies wird durch die zwei Pfeile L1 vom ersten Knoten K1 zum zweiten bzw. vierten Knoten K2, K4 symbolisiert. Weiterhin führt der zweite Knoten K2 eine unsymmetrische Liste mit einem Eintrag, dem sechsten Knoten K6. Weiterhin führt der zweite Knoten K2 eine symmetrische Liste, die den dritten Knoten K3 enthält. Der dritte Knoten wiederum führt eine symmetrische Liste, die den zweiten Knoten K2 enthält. Die unsymmetrische Liste des vierten Knotens K4 enthält den dritten und fünften Knoten K3, K5, während die unsymmetrische Liste des sechsten Knotens K6, dargestellt durch den Pfeil L6, den ersten Knoten K1 enthält.

Als unsymmetrische Listen werden hierbei solche Listen eines ersten Knotens K1...6 bezeichnet, die zumindest einen Knoten K1...6 enthalten, in dessen Liste der erste Knoten K1...6 wiederum nicht enthalten ist. Hingegen ist eine symmetrische Liste eines ersten Knotens K1...6 eine solche, bei der der erste Knoten K1...6 in jeder Liste der Knoten K1...6 seiner Liste ebenfalls enthalten ist.

Im beispielhaften Netzwerk PN sollen alle Knoten K1...6 hinter einem Port-Restricted-NAT-Gerät sitzen, das einen Zugriffsschutz gewährt. Sendet einer der Knoten K1...6 des Netzwerks PN eine Nachricht an einen weiteren Knoten K1...6, so wird der Zugriffsschutz für eine Zeitspanne von 30 Sekunden in Bezug auf den weiteren Knoten aufgehoben. Das bedeutet, dass innerhalb dieser Zeitspanne von 30 Sekunden der weitere Knoten eine Nachricht an den ersten Knoten senden kann und dieser die Nachricht auch empfangen kann. Hierbei ist es nicht notwendig, dass der weitere Knoten die erste Nachricht überhaupt empfangen kann. Vielmehr ist es auch möglich, dass dessen Zugriffsschutz den Empfang dieser ersten Nachricht unterbindet. Nichtsdestotrotz ist der Zugriffsschutz des Knotens aufgehoben.

Für das weiterhin beschriebene Vorgehen ist es nicht notwendig, dass alle Knoten K1...6 einen Zugriffsschutz aufweisen. Vielmehr funktioniert das Vorgehen auch, wenn keiner oder nur ein Teil der Knoten K1...6 einen solchen Zugriffsschutz haben.

Um nun eine Kommunikation in dem Netzwerk PN zu ermöglichen, wird der Zugriffsschutz von Knoten K1...6, die in der Liste eines zweiten Knotens K1...6 vorkommen, bezüglich dieses zweiten Knotens K1...6 periodisch aufgehoben. In diesem Ausführungsbeispiel wird davon ausgegangen, dass die Aufhebung des Zugriffsschutzes für 30 Sekunden gültig ist. Daher wird in diesem Beispiel die Aufhebung des Zugriffsschutzes periodisch mit einem Abstand von 25 Sekunden wiederholt. Dadurch ist gewährleistet, dass zu jeder Zeit ein Knoten K1...6 eine Nachricht an andere Knoten K1...6, die in seiner Liste vorkommen, senden kann und diese die Nachricht auch empfangen können. Es ist auch möglich, eine andere Zeitspanne als 25 Sekunden zu verwenden, allerdings ist es zweckmäßig, eine nicht zu kurze Zeitspanne zu verwenden, da sonst die Belastung des Netzwerks PN mit Nachrichten erhöht wird. Andererseits muss die gewählte Zeitspanne zumindest für unsymmetrische Listen kürzer sein als das Intervall, nachdem der Zugriffsschutz wieder aufgebaut wird, also hier 30 Sekunden. Zweckmäßig ist es weiterhin, die Zeitspanne für die periodische Aufhebung des Zugriffsschutzes so zu wählen, dass kleine Verzögerungen in der Übermittlung der entsprechenden Nachrichten nicht dazu führen, dass der Zugriffsschutz nicht rechtzeitig wieder aufgehoben wird und in der Folge gar nicht mehr aufhebbar ist.

In diesem Beispiel sendet also der erste Knoten K1 alle 25 Sekunden eine Nachricht an den zweiten Knoten K2 und den vierten Knoten K4. Diese zweiten Knoten K2, K4 senden nach Erhalt dieser Nachricht je eine weitere Nachricht an den Knoten K1. Die weiteren Nachrichten sorgen dafür, dass der Zugriffschutz der Knoten K2 und K4 in Bezug auf den ersten Knoten K1 für weitere 30 Sekunden aufgehoben ist. Dabei ist es möglich, dass die Nachrichten, die vom ersten Knoten K1 an den zweiten und vierten Knoten K2, K4 gesendet werden, eine Aufforderung enthalten, eine weitere Nachricht zurückzusenden. Es ist alternativ jedoch auch möglich, dass die Nachrichten keine Aufforderung enthalten, jedoch das verwendete Netzwerk-Protokoll in dem Netzwerk PN vorsieht, dass auf bestimmte Nachrichten geantwortet wird.

Im Weiteren soll der Fall betrachtet werden, dass der erste Knoten K1 eine erste Nachricht an den sechsten Knoten K6 übermitteln möchte. Weiterhin wird davon ausgegangen, dass der erste Knoten K1 nicht die Zugriffsadresse des sechsten Knotens K6 kennt. Der erste Knoten K1 kann lediglich eine direkte Verbindung zu denjenigen Knoten K2, K4 aufnehmen, die in seiner Liste verzeichnet sind, d.h. zum zweiten und vierten Knoten K2, K4.

Hierzu wird nun eine Folge von Zwischenknoten bestimmt. Diese beginnt mit einem dem ersten Knoten K1 zugeordneten Zwischenknoten. Sie endet mit einem Zwischenknoten, dem der sechste Knoten K6 zugeordnet ist. Dazu wählt der erste Knoten K1 einen Zwischenknoten, der in seiner Liste verzeichnet ist. In diesem Fall wählt der erste Knoten K1 den zweiten Knoten K2. Hierbei ist es zweckmäßig, wenn der erste Knoten dem zweiten Knoten eine Anfrage-Nachricht übermittelt. Durch die periodische Aufhebung des Zugriffsschutzes bezüglich der Knoten seiner Liste ist es möglich, dass der zweite Knoten K2 die Anfrage-Nachricht empfängt. In diesem Ausführungsbeispiel enthält die Anfrage-Nachricht, die an den zweiten Knoten K2 übermittelt wird, eine Suchanfrage nach dem sechsten Knoten K6. Der zweite Knoten K2 findet in seinen Listen den sechsten Knoten K6 vor. Daraufhin übermittelt der zweite Knoten K2 dem ersten Knoten K1 die Zugriffsadresse des sechsten Knotens K6. Der erste Knoten K1 wiederum kann diese Nachricht empfangen, da er vorher die Suchanfrage an den zweiten Knoten K2 versendet hat. Weiterhin übermittelt der zweite Knoten K2 an den sechsten Knoten K6 eine Aufhebungsnachricht, die zum Inhalt hat, dass der sechste Knoten K6 eine beliebige Nachricht an den ersten Knoten K1 versenden soll. Daraufhin versendet der sechste Knoten K6 eine beliebige Nachricht an den ersten Knoten K1. Dieser kann in diesem Moment im Allgemeinen die beliebige Nachricht nicht empfangen, da der Zugriffsschutz des ersten Knotens K1 in Bezug auf den sechsten Knoten K6 nicht aufgehoben ist. Durch die beliebige Nachricht wird jedoch der Zugriffsschutz des sechsten Knotens K6 in Bezug auf den ersten Knoten K1 aufgehoben. Da weiterhin der erste Knoten K1 vom zweiten Knoten K2 eine Nachricht mit der Zugriffsadresse des sechsten Knotens K6 bekommt, kann in der Folge der erste Knoten K1 die erste Nachricht direkt an den sechsten Knoten K6 übermitteln.

In diesem Ausführungsbeispiel führen der zweite und der dritte Knoten K2, K3 je eine symmetrische Liste. Diese symmetrischen Listen enthalten den jeweils anderen Knoten K2, K3. Sie lassen sich beim periodischen Aufheben des Zugriffsschutzes vorteilhaft nutzen. So ist es zum einen nicht erforderlich, an einen Knoten aus einer symmetrischen Liste eine derartige Nachricht zu senden, die eine Aufforderung zur Zurücksendung einer weiteren Nachricht enthält. Dies liegt daran, dass der jeweils andere Knoten bei symmetrischen Listen ebenfalls periodisch eine Aufhebung des Zugriffsschutzes durchführen wird. Diese automatische Sendung passiert in diesem Fall unabhängig von der ersten Nachricht. In diesem Ausführungsbeispiel wird der zweite Knoten K2 alle 25 Sekunden eine Nachricht an den dritten Knoten K3 senden und der dritte Knoten K3 wird ebenfalls alle 25 Sekunden eine Nachricht an den zweiten Knoten K2 senden.

Ein weiterer besonderer Vorteil, der sich aus den symmetrischen Listen ergibt, ist die Möglichkeit, längere Zeitspannen für die periodische Aufhebung des Zugriffsschutzes zu wählen. Dies liegt wiederum daran, dass beide Knoten in symmetrischen Listen sich jeweils unabhängig voneinander entsprechende Nachrichten zur Aufhebung des jeweiligen Zugriffsschutzes senden werden. Diese Aufhebung des Zugriffsschutzes funktioniert - im Gegensatz zum Fall unsymmetrischer Listen - auch dann, wenn der Zugriffsschutz in beiden Knoten in Bezug auf den jeweiligen anderen Knoten in Kraft getreten ist. Das bedeutet wiederum, dass die Zeitspanne, die für die periodische Aufhebung des Zugriffsschutzes gewählt wird, sogar größer sein kann als die Zeitdauer, für die der jeweilige Zugriffsschutz nach versenden einer Nachricht offen gehalten wird. Dadurch wiederum kann die Netzwerkbelastung, die durch die zusätzlichen Nachrichten für die Aufhebung des Zugriffsschutzes auftritt, reduziert werden.

Der zweite und dritte Knoten K2, K3 kann also in einer Ausführungsalternative beliebige Nachrichten zur Aufhebung des Zugriffsschutzes bezüglich des jeweils anderen Knotens K2, K3 verwenden. Eine direkte Rücksendung einer weiteren Nachricht ist nicht erforderlich. Weiterhin kann die Zeitspanne für die periodische Aufhebung des Zugriffsschutzes bspw. auf 40 Sekunden erhöht werden. Dadurch besteht periodisch nach den 30 Sekunden Zugriffsfreiheit für ca. 10 Sekunden ein gegenseitiger Zugriffsschutz des zweiten und dritten Knotens K2, K3, jedoch wird die Netzbelastung mit Nachrichten reduziert.

Eine weitere vorteilhafte Ausführungsalternative ergibt sich, wenn ein Teil der Knoten K1...6 oder alle Knoten K1...6 den anderen Knoten K1...6 des Netzwerks PN eine Information zur Verfügung stellen, aus der die anderen Knoten K1...6 entnehmen können, ob und welche Art von Zugriffsschutz für den jeweiligen Knoten K1...6 besteht.

Wenn zum Beispiel der vierte Knoten K4 des Netzwerks PN gemäß Figur 1 keinen Zugriffsschutz aufweist, so ist es auch nicht notwendig, dass der Zugriffsschutz des vierten Knotens K4 periodisch aufgehoben wird. Das bedeutet, dass diejenigen Knoten K1, die den vierten Knoten K4 in ihrer Liste verzeichnet haben, d.h. in diesem Fall der erste Knoten K1, auf die periodisch fälligen Nachrichten zur Aufhebung des Schutzes verzichten können und dass auch die entsprechenden Antwort-Nachrichten auf diese Nachrichten entfallen.

Auch beim Übermitteln einer ersten Nachricht an einen zweiten Knoten kann auf bestimmte Nachrichten verzichtet werden, wenn bekannt ist, dass bestimmte Knoten K1...6 keinen Zugriffsschutz aufweisen.

Wenn bspw. der zweiten Knoten K2 eine erste Nachricht an den fünften Knoten K5 übermitteln möchte, so würde hierfür eine Folge von Zwischenknoten ermittelt werden, die vom zweiten Knoten K2 über den sechsten, ersten und vierten Knoten K6, K1, K4 zum fünften Knoten K5 führt. Da der vierte Knoten K4 keinen Zugriffsschutz aufweist, ist es auch nicht notwendig, dass der erste Knoten K1 eine Aufhebungsnachricht an den vierten Knoten K4 versendet, die diesen wiederum dazu auffordern würde, eine beliebige Nachricht an den zweiten Knoten K2 zu versenden, um den Zugriffsschutz des vierten Knotens K4 in Bezug auf den zweiten Knoten K2 aufzuheben. Es werden also hierbei wiederum zwei das Netzwerk PN belastende Nachrichten vermieden.

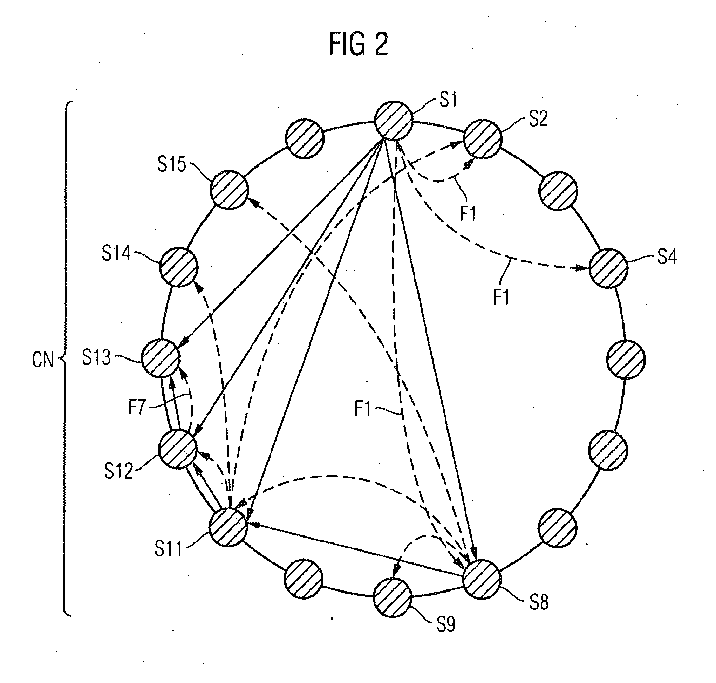

Weitere Vorteile und Einzelheiten der Erfindung ergeben sich aus dem Chord-Netzwerk CN gemäß Figur 2.

Das Chord-Netzwerk CN bildet dabei eine ringförmige Struktur, wobei die Stützpunkte des Ringes in diesem Fall durch Schlüssel S1...16 gebildet werden. Ein Schlüssel S1...16 kann dabei einen tatsächlichen Netzwerkknoten repräsentieren, muss es aber nicht.

Auch die im Chord-Netzwerk vorhandenen Dateien erhalten Schlüssel S1...16. Die Schlüssel S1...16, die sowohl für die Knoten des Netzwerks CN als auch für die Dateien, die im Netzwerk gespeichert sind, verwendet werden, sind dabei so gestaltet, dass jedem Knoten und jeder Datei ein eindeutiger Schlüssel zugewiesen werden kann. Daher sind die in realen Chord-Netzwerken verwendeten Schlüssel wesentlich länger als die hier beispielhaft verwendeten 4 Bit, die 16 verschiedene Werte ergeben. Eine weitere Eigenschaft von Chord-Netzwerken CN ist, dass Dateien anhand ihres jeweiligen Schlüssels einem bestimmten Knoten zur Speicherung zugewiesen werden. Sucht ein anderer Netzwerkknoten nach einem bestimmten Schlüssel S1...S16, so lässt sich aus diesem Schlüssel direkt der Ort des Schlüssels Schlüssel S1...S16 ermitteln. Weiterhin kann in einem großen Chord-Netzwerk CN mit einer Vielzahl von Rechnern nicht jeder Knoten die Zugriffsadressen aller anderen Knoten kennen. Daher ist zweckmäßig jedem Knoten eine Liste mit weiteren Knoten zugeordnet. Jeder Knoten kann auf die Knoten, die in seiner Liste vorkommen, direkt zugreifen, d.h. die Zugriffsadressen der Knoten aus der Liste sind dem Knoten bekannt.

Im beispielhaften Chord-Netzwerk CN gemäß Figur 2 existieren zehn Knoten, die dem ersten, zweiten, vierten, achten, neunten sowie elften bis fünfzehnten Schlüsseln S1, S2, S4, S8, S9, S11...15 zugeordnet sind. Jedem dieser Knoten ist eine Liste, genannt Fingerliste mit drei Knoten zugeordnet. Die Fingerlisten sind in diesem Beispiel unsymmetrisch, können aber auch symmetrisch sein. Es ist alternativ auch möglich, dass ein Knoten unsymmetrische und symmetrische Listen führt. Die jeweiligen Fingerlisten sind in Figur 2 durch die Pfeile F1...7 symbolisiert, wobei nicht alle Fingerlisten und nicht alle in Fingerlisten enthaltenen Knoten durch Pfeile dargestellt sind.

Im Folgenden soll nun gezeigt werden, wie der Knoten, der dem ersten Schlüssel S1 zugeordnet ist, eine Datei anfordern kann, die auf dem dem dreizehnten Schlüssel S13 zugeordneten achten Knoten gespeichert ist. Dabei wird davon ausgegangen, dass alle Knoten zugriffsgeschützt sind. Der Zugriffsschutz entspricht dabei dem, der auch im ersten Ausführungsbeispiel verwendet wurde.

Es wird davon ausgegangen, dass der erste Knoten anhand des Schlüssels der Datei ermitteln kann, dass die Datei auf dem dem dem dreizehnten Schlüssel S13 zugeordneten Knoten gespeichert ist. Die ringartige Struktur des Chord-Netzwerks CN erlaubt dem ersten Knoten, denjenigen Knoten aus seiner Fingerliste zu ermitteln, der dem achten Knoten am nächsten liegt. In diesem Fall ist das der vierte Knoten, der dem achten Schlüssel S8 zugeordnet ist.

Wie im ersten Ausführungsbeispiel wird auch in diesem Chord-Netzwerk CN der Zugriffsschutz von Knoten, die sich in der Liste eines anderen Knotens befinden, in Bezug auf diesen anderen Knoten periodisch aufgehoben. Somit ist der erste Knoten in der Lage, dem vierten Knoten eine Nachricht zu übermitteln, die dieser auch empfangen kann. Diese Nachricht enthält eine Suchanfrage nach dem achten Knoten. Der vierte Knoten kann nun seinerseits denjenigen Knoten aus seiner Fingerliste ermitteln, der dem dreizehnten Schlüssel S13 am nächsten liegt. Dies ist in diesem Fall der sechste Knoten, der dem elften Schlüssel S11 zugeordnet ist. Da dieser sechste Knoten nicht in der Fingerliste des ersten Knotens vorkommt, kann der sechste Knoten keine Nachricht direkt vom ersten Knoten empfangen. Dies liegt zum einen daran, dass der erste Knoten die Zugriffsadresse des sechsten Knotens nicht kennt und zum anderen daran, dass der Zugriffsschutz des sechsten Knotens einen Empfang einer Nachricht vom ersten Knoten verhindern würde.

Daher übermittelt der vierte Knoten eine Aufhebungs-Nächricht an den sechsten Knoten, in der dieser aufgefordert wird, dem ersten Knoten eine Nachricht zu senden. In diesem Beispiel ist diese Nachricht beliebig und dient lediglich der Aufhebung des Zugriffsschutzes des sechsten Knotens in Bezug auf den ersten Knoten. Der vierte Knoten sendet wiederum dem ersten Knoten eine Nachricht, in der der erste Knoten die Zugriffsadresse des sechsten Knotens erhält. Durch diese beiden Nachrichten ist es nun möglich, dass der erste Knoten seine Suchanfrage erneut übermittelt, dieses Mal an den sechsten Knoten.

Der sechste Knoten wiederholt nun die Vorgehensweise, die bereits der vierte Knoten durchgeführt hat. Er findet als dem Ziel, d.h. dem achten Knoten bzw. dem dreizehnten Schlüssel S13 nächstliegenden Knoten den siebten Knoten, der dem zwölften Schlüssel S12 zugeordnet ist. Daraufhin sendet der sechste Knoten eine Aufhebungs-Nachricht an den siebten Knoten, die diesen wiederum dazu veranlasst, eine Nachricht an den ersten Knoten zu übermitteln, um den Zugriffsschutz des siebten Knotens in Bezug auf den ersten Knoten aufzuheben. Weiterhin sendet der sechste Knoten die Zugriffsadresse des siebten Knotens an den ersten Knoten. Der erste Knoten sendet daraufhin seine Suchanfrage an den siebten Knoten.

Der siebte Knoten wiederholt nun das Verfahren und kann letztendlich die Zugriffsadresse des achten Knotens dem ersten Knoten übermitteln und mittels einer Aufhebungsnachricht den Zugriffsschutz des achten Knotens in Bezug auf den ersten Knoten aufheben lassen.

Hierauf kann der erste Knoten eine Anforderungsnachricht an den achten Knoten übermitteln, in der der achte Knoten aufgefordert wird, den gesuchten Inhalt an den ersten Knoten zu übermitteln. Durch die beschriebene Folge von Nachrichten wird jeweils der Zugriffsschutz in der Form aufgehoben, dass die Übermittlung der weiteren Nachrichten ermöglicht wird. Speziell wird durch die Übermittlung der Suchanfrage vom ersten an den achten Knoten möglich, dass der erste Knoten die Antwort des achten Knotens, d.h. den gesuchten Inhalt empfangen kann, da der Zugriffsschutz des ersten Knotens dies ohne weiteres Zutun verhindern würde.

In Ausführungsalternativen ist es auch möglich, die Abfolge oder den Inhalt von bestimmten Nachrichten zu verändern, solange dabei die notwendige Aufhebung des Zugriffsschutzes nicht berührt wird. Beispielsweise kann die Übermittlung der Suchanfrage auch durch den aktuell suchenden Knoten an den weiteren suchenden Knoten erfolgen, also gemäß dem obigen Beispiel vom vierten an den sechsten und von diesem an den siebten Knoten. Auch in diesem Fall muss der Zugriffsschutz vom weiteren suchenden Knoten in Bezug auf den ersten Knoten und umgekehrt aufgehoben werden. Dies kann bspw. durch Aufhebungsnachrichten geschehen, die der jeweilige aktuelle suchende Knoten sowohl dem ersten als auch dem weiteren suchenden Knoten übermittelt. Diese fordern die beiden betroffenen Knoten auf, dem jeweils anderen Knoten eine beliebige Nachricht zu senden.

Die gleichen Vorteile wie im ersten Ausführungsbeispiel lassen sich auch beim Chord-Netzwerk CN erzielen, wenn symmetrische Listen verwendet werden und/oder wenn die Knoten Informationen bezüglich ihres Zugriffschutzes den anderen Knoten zur Verfügung stellen.

Wiederum können Nachrichten vermieden werden, die der Aufhebung des Zugriffsschutzes dienen, wenn gar kein Zugriffsschutz besteht. Weist bei der beispielhaften Übermittlung der Suchanfrage an den achten Knoten der erste Knoten keinen Zugriffsschutz auf, so können optional bspw. alle Nachrichten entfallen, die dazu dienen, den Zugriffsschutz des ersten Knotens aufzuheben.

Eine weitere vorteilhafte Art, Nachrichten zu vermeiden, wird dadurch erreicht, dass die Knoten des Chord-Netzwerks CN speichern, mit welchen anderen Knoten sie innerhalb der letzten bspw. 20 Sekunden Nachrichten ausgetauscht, d.h. empfangen und/oder gesendet haben. Weitere Nachrichten, die lediglich der Aufhebung des Zugriffsschutzes dienen, können dadurch vermieden werden, wenn der Zugriffsschutz bereits aufgehoben ist.

## Patentansprüche

1. Verfahren zur Übermittlung einer Nachricht von einem ersten Knoten (K1) an einen zweiten Knoten (K6) in einem Netzwerk mit Knoten (K1, K2, ..., K6), wobei zumindest einem Teil der Knoten (K1, K2, ..., K6) jeweils wenigstens ein weiterer Knoten (K1, K2, ..., K6) zugeordnet ist, für den ein Zugriffsschutz in Bezug auf den jeweiligen Knoten periodisch aufgehoben ist, wobei ein jeweiliger Knoten des zumindest einen Teils der Knoten (K1, K2, ..., K6) eine Liste von Knoten (K1, K2, ..., K6) enthält und der jeweilige Knoten in jeder Liste der Knoten seiner Liste ebenfalls enthalten ist, wobei der jeweilige Knoten periodisch Nachrichten an die Knoten seiner Liste sendet,
bei dem eine Folge aus wenigstens einem Zwischenknoten (K2) ermittelt wird, dergestalt, dass ein erster Zwischenknoten (K2) der Folge dem ersten Knoten (K1) zugeordnet ist, der zweite Knoten (K6) einem letzten Zwischenknoten (K2) der Folge zugeordnet ist und den anderen Zwischenknoten der Folge je ein nächster Zwischenknoten der Folge zugeordnet ist,
wobei wenigstens einer der Zwischenknoten (K2) eine Aufhebungsanfrage-Nachricht an einen ihm zugeordneten Knoten (K6) sendet, die das Senden einer Nachricht an den ersten Knoten (K1) durch den dem Zwischenknoten (K2) zugeordneten Knoten (K6) auslöst,
wobei die Nachricht einen Zugriffsschutz des dem Zwischenknoten (K2) zugeordneten Knotens (K6) in Bezug auf den ersten Knoten (K1) aufhebt.

2. Verfahren nach Anspruch 1, **dadurch gekennzeichnet, dass** vom Zwischenknoten (K2) der Folge die Adresse des ihm zugeordneten Knotens (K6) an den ersten Knoten (K1) übermittelt wird.

3. Verfahren nach Anspruch 1 oder 2, **dadurch gekennzeichnet, dass** die Adresse des zweiten Knotens (K6) vom letzten Zwischenknoten (K2) der Folge an den ersten Knoten (K1) übermittelt wird.

4. Verfahren nach einem der vorangehenden Ansprüche, **dadurch gekennzeichnet, dass** bei der Ermittlung der Folge jeder Zwischenknoten (K2) die Adresse des nächsten Zwischenknotens an den ersten Knoten übermittelt.

5. Verfahren nach Anspruch 4, **dadurch gekennzeichnet, dass** bei der Ermittlung der Folge der erste Knoten (K1) an jeden Zwischenknoten (K2) eine Suchanfrage-Nachricht übermittelt.

6. Verfahren nach einem der vorangehenden Ansprüche, **dadurch gekennzeichnet, dass** wenigstens der letzte Zwischenknoten (K2) der Folge eine Aufhebungsanfrage-Nachricht an den zweiten Knoten (K6) sendet.

7. Verfahren nach dem vorangehenden Anspruch, **dadurch gekennzeichnet, dass** durch jeden Zwischenknoten (K2) eine Aufhebungsanfrage-Nachricht gesendet wird und dass das Übermitteln einer Suchanfrage-Nachricht an jeden Zwischenknoten (K2) erfolgt.

8. Verfahren nach einem der vorangehenden Ansprüche, **dadurch gekennzeichnet, dass** für eine Übermittlung eines Inhalts an einen Zielknoten (K1) die folgenden Schritte durchgeführt werden:
- Ermittlung wenigstens eines Quellknotens (K6), auf dem der Inhalt gespeichert ist;
- Übermittlung einer Anforderungsnachricht für den Inhalt vom Zielknoten (K1) an den Quellknoten (K6);
- Übermittlung des Inhalts vom Quellknoten (K6) an den Zielknoten (K1).

9. Verfahren nach einem der vorangehenden Ansprüche, **dadurch gekennzeichnet, dass** wenigstens ein Teil der Knoten (K1, K2, ..., K6) eine Information über sich anderen Knoten (K1, K2, ..., K6) zur Verfügung stellt, wobei die Information die Art seines Zugriffsschutzes enthält.

10. Verfahren nach einem der vorangehenden Ansprüche, **dadurch gekennzeichnet, dass** wenigstens ein Teil der Knoten (K1, K2, ..., K6) speichert, an welche Knoten (K1, K2, ..., K6) innerhalb einer festlegbaren Merkzeitspanne Nachrichten gesendet wurden und/oder von welchen Knoten innerhalb der festlegbaren Merkzeitspanne Nachrichten empfangen wurden.

11. Netzwerk (PN) umfassend Knoten mit Mitteln zur Durchführung des Verfahrens gemäß einem der vorangehenden Ansprüche.

12. Netzwerk (PN) nach dem vorangehenden Anspruch, **dadurch gekennzeichnet, dass** es als Peer-to-Peer-Netzwerk, insbesondere als Chord-Netzwerk, funktioniert.

## Claims

1. Method for transmitting a message from a first node (K1) to a second node (K6) in a network with nodes (K1, K2, ..., K6), at least some of the nodes (K1, K2, ..., K6) each being assigned at least one further node (K1, K2, ..., K6), for which access protection relating to the respective node is periodically cancelled, a respective node of at least some of the nodes (K1, K2, ..., K6) containing a list of nodes (K1, K2, ..., K6) and the respective node likewise being contained in each list of the nodes in its list, the respective node periodically sending messages to the nodes in its list,
in which a sequence is determined from at least one intermediate node (K2), such that a first intermediate node (K2) in the sequence is assigned to the first node (K1), the second node (K6) is assigned to a final intermediate node (K2) in the sequence and a next intermediate node in the sequence is assigned to each of the other intermediate nodes in the sequence,
at least one of the intermediate nodes (K2) sending a cancellation request message to a node (K6) assigned to it, which message triggers the sending of a message to the first node (K1) by the node (K6) assigned to the intermediate node (K2),
the message cancelling access protection in respect of the first node (K1) for the node (K6) assigned to the intermediate node (K2).

2. Method according to claim 1, **characterised in that** the address of the node (K6) assigned to the intermediate node (K2) in the sequence is transmitted by said intermediate node (K2) to the first node (K1).

3. Method according to claim 1 or 2, **characterised in that** the address of the second node (K6) is transmitted from the final intermediate node (K2) in the sequence to the first node (K1).

4. Method according to one of the preceding claims, **characterised in that** when determining the sequence each intermediate node (K2) transmits the address of the next intermediate node to the first node.

5. Method according to claim 4, **characterised in that** when determining the sequence the first node (K1) transmits a search request message to each intermediate node (K2).

6. Method according to one of the preceding claims, **characterised in that** at least the final intermediate node (K2) in the sequence sends a cancellation request message to the second node (K6).

7. Method according to the preceding claim, **characterised in that** a cancellation request message is sent by each intermediate node (K2) and that the transmission of a search request message is effected to each intermediate node (K2).

8. Method according to one of the preceding claims, **characterised in that** the following steps are executed for a transmission of content to a destination node (K1):
- determination at least of one source node (K6), on which the content is stored;
- transmission of a request message for the content from the destination node (K1) to the source node (K6);
- transmission of the content from the source node (K6) to the destination node (K1).

9. Method according to one of the preceding claims, **characterised in that** at least some of the nodes (K1, K2, ..., K6) provide information about themselves to other nodes (K1, K2, ..., K6), the information containing the type of their access protection.

10. Method according to one of the preceding claims, **characterised in that** at least some of the nodes (K1, K2, ..., K6) store details of nodes (K1, K2, ..., K6) to which messages were sent within a definable time interval and/or from which messages were received within the definable time interval.

11. Network (PN) comprising nodes with means for executing the method according to one of the preceding claims.

12. Network (PN) according to the preceding claim, **characterised in that** it operates as a peer-to-per network, in particular as a chord network.

## Revendications

1. Procédé pour la transmission d'un message d'un premier noeud (K1) vers un deuxième noeud (K6) dans un réseau comprenant des noeuds (K1, K2, ..., K6), à au moins une partie des noeuds (K1, K2, ..., K6) étant respectivement associé au moins un autre noeud (K1, K2, ..., K6) pour lequel une protection d'accès est périodiquement annulée en ce qui concerne le noeud respectif, un noeud respectif de l'au moins une partie des noeuds (K1, K2, ..., K6) contenant une liste de noeuds (K1, K2, ..., K6) et le noeud respectif étant également contenu dans chaque liste des noeuds de sa liste, le noeud respectif envoyant périodiquement des messages aux noeuds de sa liste,
dans lequel une suite d'au moins un noeud intermédiaire (K2) est déterminée de manière telle qu'un premier noeud intermédiaire (K2) de la suite est associé au premier noeud (K1), le deuxième noeud (K6) est associé à un dernier noeud intermédiaire (K2) de la suite et respectivement un noeud intermédiaire suivant de la suite est associé aux autres noeuds intermédiaires de la suite,
au moins l'un des noeuds intermédiaires (K2) envoyant un message de demande d'annulation à un noeud (K6) qui lui est associé, lequel message déclenche l'envoi d'un message au premier noeud (K1) par le noeud (K6) associé au noeud intermédiaire (K2),
le message annulant une protection d'accès du noeud (K6) associé au noeud intermédiaire (K2) en ce qui concerne le premier noeud (K1).

2. Procédé selon la revendication 1, **caractérisé en ce que** le noeud intermédiaire (K2) de la suite transmet l'adresse du noeud (K6) qui lui est associé au premier noeud (K1).

3. Procédé selon la revendication 1 ou 2, **caractérisé en ce que** l'adresse du deuxième noeud (K6) est transmise par le dernier noeud intermédiaire (K2) de la suite au premier noeud (K1).

4. Procédé selon l'une des revendications précédentes, **caractérisé en ce que**, lors de la détermination de la suite, chaque noeud intermédiaire (K2) transmet l'adresse du noeud intermédiaire suivant au premier noeud.

5. Procédé selon la revendication 4, **caractérisé en ce que**, lors de la détermination de la suite, le premier noeud (K1) transmet un message de demande de recherche à chaque noeud intermédiaire (K2).

6. Procédé selon l'une des revendications précédentes, **caractérisé en ce qu'**au moins le dernier noeud intermédiaire (K2) de la suite envoie un message de demande d'annulation au deuxième noeud (K6).

7. Procédé selon la revendication précédente, **caractérisé en ce qu'**un message de demande d'annulation est envoyé par chaque noeud intermédiaire (K2) et **en ce que** la transmission d'un message de demande de recherche se fait vers chaque noeud intermédiaire (K2).

8. Procédé selon l'une des revendications précédentes, **caractérisé en ce que** les étapes suivantes sont effectuées pour une transmission d'un contenu au noeud de destination (K1) :
- détermination d'au moins un noeud source (K6) sur lequel le contenu est stocké ;
- transmission d'un message de requête du contenu du noeud de destination (K1) au noeud source (K6) ;
- transmission du contenu du noeud source (K6) au noeud de destination (K1).

9. Procédé selon l'une des revendications précédentes, **caractérisé en ce qu'**au moins une partie des noeuds (K1, K2, ..., K6) met une information sur elle-même à la disposition d'autres noeuds (K1, K2, ..., K6), l'information contenant la nature de sa protection d'accès.

10. Procédé selon l'une des revendications précédentes, **caractérisé en ce qu'**au moins une partie des noeuds (K1, K2, ..., K6) mémorise à quels noeuds (K1, K2, ..., K6) des messages ont été envoyés dans un laps de temps déterminable et/ou de quels noeuds des messages ont été reçus dans le laps de temps déterminable.

11. Réseau (PN) comprenant des noeuds avec des moyens pour exécuter le procédé selon l'une des revendications précédentes.

12. Réseau (PN) selon la revendication précédente, **caractérisé en ce qu'**il fonctionne en tant que réseau peer to peer, et plus particulièrement en tant que réseau Chord.
